# EUROPEAN PATENT SPECIFICATION

(11) **EP 2 340 896 B1**
(45) Date of publication and mention of the grant of the patent: **11.03.2015**
(21) Application number: 11163160.2
(22) Date of filing: 29.11.2005
(51) Int. Cl.: B08B 1/00, B08B 9/023, C02F 1/32

(54) **Scraper for cleaning tubular members**
Schaber zur Reinigung von rohrförmigen Elementen
Racleur pour nettoyer des éléments tubulaires

(30) Priority: 10.12.2004 US 8827
(43) Date of publication of application: 06.07.2011
(62) Divisional of application: 05825584.5
(73) Proprietor: Calgon Carbon Corporation, Pittsburgh, PA 15205 (US)
(72) Inventor: Sotirakos, Bill, Thornhill Ontario L3T 1J1 (CA); Wang, Demao, Toronto Ontario M2H 1G1 (CA)
(74) Representative: Müller-Boré & Partner Patentanwälte PartG mbB

(56) References cited:
- CH-A5- 686 116
- DE-A1- 2 549 321
- US-A- 5 501 843
- US-B2- 6 432 213

## Description

### FIELD OF THE INVENTION

This invention relates generally to an improvement in an apparatus for cleaning scale, rust, and organic and inorganic deposits from the external surface of a tubular member, and, in particular, to an apparatus for reducing the clogging associated with an apparatus used to clean the outer surface of a quartz-sleeve used to house ultraviolet lamps for disinfecting fluids and creating photochemical reactions.

### BACKGROUND OF THE INVENTION

It was noted early in the use of Ultraviolet ("UV") lamps to treat water potentially containing harmful bacteria and viruses that their outer surfaces became coated by compounds resident in the water. For example, when a UV lamp is submerged in the water while inside a protective quartz sleeve almost all of the UV light enters the water. These types of UV lamps operate with surface temperatures from 40 °C to 800 °C depending upon the type of lamp. The water may contain compounds such as calcium, manganese, iron and the like that may precipitate onto the surface of the quartz sleeve due to the heat created by the lamp housed therein. Such precipitate will prevent the UV light from reaching the water to disinfect it or promote a chemical reaction. If the build up of substances becomes great enough to absorb all the UV light the non-ultraviolet wavelengths produced by the lamps will promote microbial growth on the outer surface of the quartz sleeves. Such a coating on the quartz sleeve requires some type of in-place cleaning system or the isolation and disassembly of the UV unit for manual cleaning. The cleaning of the quartz tubes around the UV lamps has been a major challenge for manufacturers of such equipment. Numerous scrapers, brushes, ultrasonics, in-place acid cleaning, air scouring, and chemicals have been proposed to solve this problem.

Prior art scrapers or wipers typically involve some form of felt, rubber, metal, plastic or Teflon® that is pushed or pulled down the length or around the circumference of a quartz tube. These prior art systems describe different ways of carrying out this process. U.S. Patent No. 1,998,076 for a scraper was issued to H.M. Creighton *et al.* in 1935. This scraper is pressed against a quartz sleeve and it was driven by a set of gears with the lamp in the centre. Variations on the wiper of Creighton *et al.* followed. S. Ellner in 1965 used an external motor with gears to push a scraper down the length of a quartz tube (U.S. Patent No. 3,182,193) inside a pressurized UV system. J. Czulak et al. in U.S. Patent No. 3,336,099 described a wiper that was driven along the length of the quartz tube by the flow of water. -G. W. Robertson also used the flow of water to drive a floating wiper down the length of a quartz tube. It had fins so that it spun as it moved along the quartz tube. In 1965 A. Young received U.S. Patent No. 3,462,597 for a wiper system with a plunger to manually push a wiper the length of the single ended quartz tubes. The wiper was made of Teflon®. H. Boehme in 1990 was granted U.S. Patent No. 4,922,114 for almost an identical system. In 1965 D. E. Wiltrout was issued U.S. Patent No. 3,566,105 for an hydraulic means to push the wiper along the length of a quartz tube. A. F. McFarland et al. (U.S. Patent No. 3,182,191 in 1965); R. W. Hippen (U.S. Patent No. 3,562,520 in 1971); and D. G. Hagger and R. L. Petersen (U.S. Patent No. 5,227,140 in 1993) used a spring to return a wiper to the resting position when the water ceased to flow. M. D. Wood in U.S. Patent No. 4,367,410 expanded on the idea of a wiper when he cleaned the entire UV array with one assembly. See, eg., Fig. 3 of that patent. This system was not successful due to tolerance problems that resulted in breakage of the quartz sleeves. U.S. Patent No. 5,528,044 was issued to J.A. Hutchison in 1996 for a wiper that was made from flat pieces of very thin metal (Figure 1 of that patent). The inner circumference of the wiper had small cuts in it so that the wiper would flex as it moved along the quartz tube.

R.L. Peterson was issued U.S. Patent No. 5,501,843 in 1996 for a wiper that used a cartridge full of stainless steel filings or stainless steel wool (Figure 6 of that patent).

Patents have been issued for using ultrasonics for cleaning quartz sleeves in pressurized UV systems (R.M.G. Boucher U.S. Patent No. 3,672,823, E.A. Pedziwiatr U.S. Patent No. 4,728,368, and J.M. Maarschalkerweerd U.S. Patent No. 5,539,209); semi-pressurized UV systems (S. Ellner U.S. Patent No. 4,358,204); and UV probes (J.M. Maarschalkerweerd U.S. Patent No. 5,539,210). Ultrasonic systems that were used to clean UV systems for wastewater were not effective (United States Environmental Protection Agency, 1986).

U.S. Patent No. 5,133,945 was issued to Hallett et al. in 1992 for using a brush to clean quartz sleeves in a pressurized UV system. In 1993 a German design Patent DE3710250 was issued to W. Stellrecht et al. for using a brush to clean quartz sleeves and the inner surface of a pressurized UV unit.

S. Ellner was issued U.S. Patent Nos. 4,103,167, 4,899,056 and Re34,513 in 1978, 1990, and 1994 respectively for using an acid to clean quartz sleeves either in-place with a recirculation system or after lifting the UV modules out of a channel. All of these methods required that the UV system be taken out of service. P. Binot was issued U.S. Patent No. 5725757 in 1998 for use of an acid and air injection system to clean a pressurized UV system.

P. Schuerch et al. was issued U.S. Patent No. 5,332,388 in 1994 for an air scouring system for a vertical lamp UV system used for disinfecting wastewater.

J.M. Maarschalkerweerd was issued U.S. Patent No. 5,418,370 in 1995 for a chemical and mechanical method for cleaning the quartz sleeves in a semi-pressurized UV system. The quartz sleeve contracts into a sleeve and the acid inside the sleeve dissolves any minerals and the seals at the front of the sleeve scrape off any deposits. This cleaning system was modified so that the sleeve moved along the quartz sleeve. E. Ishiyama invented a chemical and mechanical method for cleaning the quartz sleeves in an open channel parallel flow UV system with horizontal lamps and was issued U.S. Patent No. 5,874,740 in 1999. The acid cleaner needs to be continually replenished.

On August 13, 2002 U.S. Patent No. 6,432,213B2 was issued to Wang and Sotirakos for a scraper (See Figure 1 of the patent) for removing deposits from the exterior of a tubular member which included elements that defined an outer jacket which has an inwardly open circumferential recess and two aligned axial openings, and a scraper element in the form of an elongate non-round resilient wire bent to define a series of integral concatenated, resilient segments, each pair of adjacent segments being connected through a bend or geniculation. This scraper is expensive to make because the outer jacket must be precisely machined. Moreover, while this scraper is very effective, it is prone to clogging inside the outer jacket with organic material, sand and other materials when it is used on the quartz sleeves of a UV system treating wastewater. U.S. Patent No. 6, 432, 213 B2 discloses a scraper in accordance with the preamble of claim 1. Examples of UV systems that could use this scraper are shown in U.S. Patent Nos. 5,006,244, 4,482809, 4,757,205, and 6,231,820B1. As the flow of wastewater is parallel to the lamps in these UV systems and perpendicular to the scraper debris is captured by the wires of the scraper and this debris is not flushed out due to the closed circumference of the scraper. This debris or sand eventually compacts inside the outer jacket formed-by-the closed circumference because of the scrapping action and prevents the scraper from working.

Accordingly, it is an object of the present invention to provide a scraper which utilizes the advantages of the resilient wire geniculated segments of U.S. Patent No. 6,432,213B2, but without the disadvantages inherent therein. This object is achieved by the scraper according to claim 1. It is a further object of the invention to provide an effective scraper for UV quartz housings which is relatively inexpensive to manufacture.

### SUMMARY OF THE INVENTION

The present invention solves the problem of clogging by removing the outer cylindrical wall from the scraper. This allows organic matter, debris, sand and the like to be flushed out of the scraper and this prolongs the time between service intervals.

The hollow circular cylinder is replaced by two plates each of which has a cylindrical opening. These plates do not require any machining and can be punched out of a plate of metal or UV resistant plastic.

Generally, the scraper of the present invention comprises first and second coaligned, spaced apart annular disks, each having an inner diameter slightly larger than the outer diameter of the tube to be cleaned by the scraper. In practice, it is preferred that the opening in the annular disks be large enough to permit a scraper cartridge interposed therebetween to extend into the respective openings when engaging a tube during cleaning. The disks are maintained in a spaced apart relationship without spacers or by at least one spacer mounted on an inner surface of each disk at its outer periphery.

Positioned between the first and second annular disk is a scraper cartridge comprising a plurality of elongated resilient wire assemblies. Each wire assembly is defined by a series of integral, concatenated, resilient wire segments where each pair of adjacent segments is connected through a geniculation. In a presently preferred embodiment of the invention, each assembly comprises three segments which are adapted to axially deform upon engagement with the surface of a tube to be cleaned. In this embodiment, the geniculation angle of the segments is approximately 60°. However, in other embodiments of the invention the number of segments can be varied and the geniculation angle increased, provided that one segment retains a substantially tangential relationship with a tube to be cleaned. The plurality of wire assemblies comprising the scraper cartridge is dimensioned so that the inner diameter of the scraper cartridge is slightly less than the outer diameter of the tube to be cleaned. In this way each segment of an assembly in contact with the tube to be cleaned is deformed to comprise a slight arc to provide a larger contact area between the segment and the tube. Because the wire is resilient, it will deflect causing it to push inwardly against the outer surface to the tube allowing it carry out a scraping and cleaning action on the surface. By arranging for substantially all of the wire segments in the cartridge to assert an inward pressure against the tube surface, effective cleaning is achieve by a back and forth motion along the axis of the tube to be cleaned.

As the material is scraped from the outer surface of the tube to be cleaned, the scraper of the present invention pushes that material along the leading edge of the scraper cartridge. However, any material that is entrapped within the assemblies of the cartridge can radially escape through and out of the cartridge by the movement of the scraper and water being forced through the scraper by such cleaning action.

Other advantages of the present invention will become apparent from a perusal of the following detailed description of a presently preferred embodiment of the invention take in connection with the accompanying drawings.

### BRIEF DESCRIPTION OF THE DRAWINGS

FIGURE. 1 is front elevation of a presently preferred embodiment of the scraper of the present invention;
FIGURE. 2 is a side elevation of the embodiment of the invention shown in FIGURE. 1
FIGURE. 3 is an elevation of the scraper cartridge which comprises a plurality of individual wire assemblies:
FIGURE. 4 is an elevation of a preferred assembly having three segments connected through geniculation of adjacent segment pairs: and
FIGURE. 5 is a side elevation of the scraper cartridge shown in FIGURE 3

### DETAILED DESCRIPTION OF-A PREFERRED EMBODIMENT

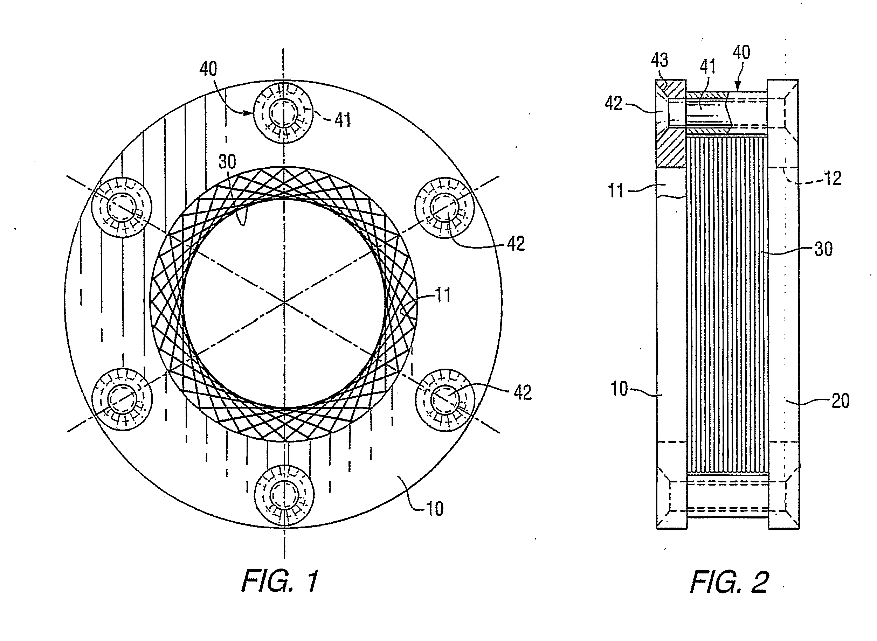

The present invention provides a scraper for removing deposits from the exterior of a tubular member, such as a tubular quartz sheath. In the presently preferred embodiment of the invention, the scraper provides a scraper cartridge comprising a plurality of scraper assemblies angularily offset from each other to contact the outer surface of a tubular member to be cleaned. In particular, and referring to Figures 1 and 2, a pair of spaced apart coaxial annular disks are provided. A first disk 10 and a second disk 20 have annular openings 11 and 12 respectively. Positioned between first disk 10 and second disk 20 is scraper cartridge 30. Spacer members 40 may be positioned between the inner faces of disks 10 and 20 at the outer periphery of the respective annular disks. Spacer members 40 may comprise a tubular member 41 through which adjustable fasteners 42 may be positioned through peripheral openings 43 in the respective disks 10 and 20. In the preferred embodiment, fasteners 42 comprise removable bolts to facilitate assembly or disassembly of the scraper. Alternatively, permanent spacer members may be secured during assembly of the scraper such as metal rods bonded to the inner peripheral surfaces of respective disks 10 and 20.

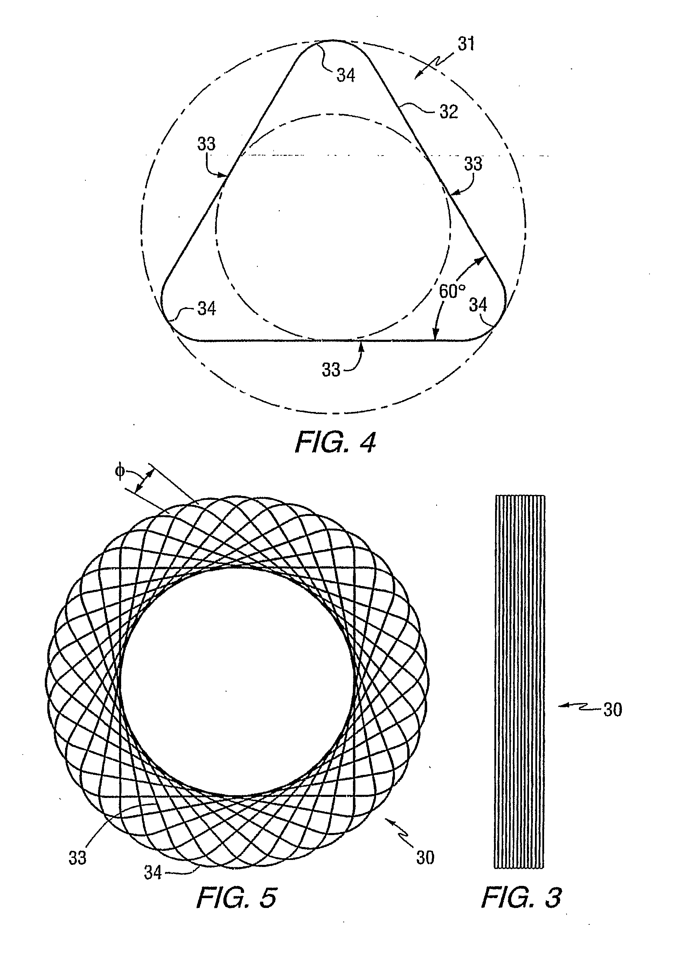

Referring to Figures 3 through 5, scraper cartridge 30 comprises a plurality of resilient wire assemblies 31 each consisting of an elongated resilient wire 32, preferably having a square of polygonal cross section. Each wire is bent to define a series of integral, concatenated, resilient segments 33, with each pair of adjacent segments 33 connected through geniculation 34. Geniculations 34 are rounded so that assemblies 31 consist of a series of relatively straight resilient segments 33 and rounded geniculations 34.

As shown in Figure 4 of the presently preferred embodiment of the invention, adjacent pairs of scraper segments 33 are positioned at an angle of 60° formed by geniculations 34 to form an approximate triangle. However, it should be noted that other angles can be used with more segments 33 provided that each assembly has at least one segment in contact with the outer surface of a tubular member to be cleaned.

With reference to Figure 3, scraper assemblies 31 are positioned in cartridge 30 so as to form an approximate triangular configuration where segments 32 are angularily offset from each other by angle *φ*, where *φ* is about 10°. When *φ* is about 10° and the tubular member to be cleaned has an external diameter of 35 millimeters, the number of resilient wire assemblies 31 used to make cartridge 30 is about 32.

In operation when the scraper is positioned coaxially over a tubular member to be cleaned through opening 11, the tangential segments 32 of cartridge 30 are forced axially outward to deform as an arc because of the resiliency of the wire. The arcuate portion of the segment 32 will push against the outer surface of the tubular member to be cleaned allowing it to carry out a scraping and cleaning action on the surface as it reciprocates back and forth along the surface of the tube in a manner well known to those skilled in the art.

While presently preferred embodiments of the invention have been shown and described in particularity, the invention may be otherwise embodied within the scope of the appended claims.

## Claims

1. A scraper for the removal of deposits from the exterior of a tubular member comprising:
a. first and second coaligned, spaced apart annular disks (10, 20) and
b. a scraper cartridge (30) mounted in co-alignment between said first and second annular disks (10, 20)
**characterized in that** the scraper cartridge comprises a plurality of resilient wire assemblies (31) positioned to define an opening having a diameter less than the external diameter of said tubular member, said plurality of wire assemblies (31) each consisting of a resilient wire having at least three integral, concatenated, resilient segments (33) defined by a geniculation (34) between two adjacent segments (33), whereby at least one of said segments (33) is aligned in said cartridge (30) to deformingly contact an exterior surface of the tubular member positioned through said opening.

2. The scraper set forth in claim 1 wherein each of said wire assemblies (31) consists of at least three segments (33).

3. The scraper set forth in claim 2 wherein each of said wire assemblies (31) is offset from an adjacent wire assembly by an angle φ, where φ is equal to about 10°.

4. The scraper set forth in claim 1 wherein said geniculations (34) form an angle of about 60°.

5. The scraper set forth in claim 1 wherein said resilient wire has a gauge of from about 0.25 to 0.51 mm (10 to 20 thousands of an inch).

6. The scraper set forth in claim 1 wherein said resilient wire has a cross section that is round or polygonal.

## Patentansprüche

1. Schaber zur Entfernung von Ablagerungen von dem Äußeren eines röhrenförmigen Elements, umfassend:
a. erste und zweite miteinander co-ausgerichtete, voneinander beabstandete ringförmige Scheiben (10, 20) und
b. eine Schaberkartusche (30) angebracht in Co-ausrichtung zwischen der ersten und zweiten ringförmigen Scheibe (10, 20), **gekennzeichnet dadurch, daß** die Schaberkartusche eine Vielzahl von elastischen Drahtanordnungen (31), angeordnet, um eine Öffnung mit einem Durchmesser von weniger als dem äußeren Durchmesser des röhrenförmigen Elements zu definieren, umfaßt, wobei die Vielzahl von Drahtanordnungen (31) jeweils aus einem elastischen Draht mit mindestens drei integralen, zusammengeknüpften, elastischen Segmenten (33) definiert durch eine Genikulation (34) zwischen zwei angrenzenden Segmenten (33) besteht, wodurch mindestens eines der Segmente (33) in der Kartusche (30) ausgerichtet wird, eine äußere Oberfläche des röhrenförmigen Elements angeordnet durch die Öffnung deformierend zu kontaktieren.

2. Schaber, wie in Anspruch 1 ausgeführt, wobei jede der Drahtanordnungen (31) aus mindestens drei Segmenten (33) besteht.

3. Schaber, wie in Anspruch 2 ausgeführt, wobei jede der Drahtanordnungen (31) von einer angrenzenden Drahteinheit durch einen Winkel ϕ versetzt ist, wobei ϕ gleich etwa 10° ist.

4. Schaber, wie in Anspruch 1 ausgeführt, wobei die Genikulationen (34) einen Winkel von etwa 60° bilden.

5. Schaber, wie in Anspruch 1 ausgeführt, wobei der elastische Draht eine Dicke bzw. Breite von etwa 0,25 bis 0,51 mm (10 bis 20 Tausendstel eines Inch) aufweist.

6. Schaber, wie in Anspruch 1 ausgeführt, wobei der elastische Draht einen Querschnitt aufweist, der rund oder polygonal ist.

## Revendications

1. Râcleur destiné à éliminer des dépôts de l'extérieur d'un élément tubulaire comprenant :
a. des premier et second disques annulaires distants (10, 20) alignés l'un par rapport à l'autre, et
b. une cartouche de râclage (30) montée dans l'alignement entre lesdits premier et second disques annulaires (10, 20)
**caractérisé en ce que** la cartouche de râclage comprend une pluralité d'ensembles de fils élastiques (31) positionnés de manière à définir une ouverture présentant un diamètre inférieur au diamètre externe dudit élément tubulaire, chacun de ladite pluralité d'ensembles de fils (31) étant constitué par un fil élastique présentant au moins trois segments élastiques unitaires associés (33) définis par un cintrage (34) entre deux segments adjacents (33), de telle sorte qu'au moins l'un desdits segments (33) est aligné sur ladite cartouche (30) de manière à entrer en contact par déformation avec une surface extérieure de l'élément tubulaire positionné à travers ladite ouverture.

2. Râcleur selon la revendication 1, dans lequel chacun desdits ensembles de fils (31) est constitué par au moins trois segments (33).

3. Râcleur selon la revendication 2, dans lequel chacun desdits ensembles de fils (31) est excentré par rapport à un ensemble de fil adjacent d'un angle Φ, dans lequel Φ est égal à 10° environ.

4. Râcleur selon la revendication 1, dans lequel lesdits cintrages (34) forment un angle de 60° environ.

5. Râcleur selon la revendication 1, dans lequel ledit fil élastique présente un calibre de 0,25 à 0,51 mm (10 à 20 millièmes de pouce) environ.

6. Râcleur selon la revendication 1, dans lequel ledit fil élastique présente une section transversale qui est ronde ou polygonale.
